# EUROPÄISCHE PATENTSCHRIFT

(11) **EP 1 783 017 B1**
(45) Veröffentlichungstag und Bekanntmachung des Hinweises auf die Patenterteilung: **14.12.2011**
(21) Anmeldenummer: 06021795.7
(22) Anmeldetag: 18.10.2006
(51) Int. Cl.: B60S 1/08

(54) **Verfahren zur Positionierung eines Scheibenwischers und Kraftfahrzeug dazu**
Method for positioning a windscreen wiper and vehicle related to this wiper
Méthode de positionnement d'un essuie-glace et véhicule lié à cet essuie-glace

(30) Priorität: 05.11.2005 DE 102005052844
(43) Veröffentlichungstag der Anmeldung: 09.05.2007
(73) Patentinhaber: GM Global Technology Operations LLC, Detroit, MI 48265-3000 (US)
(72) Erfinder: Bald, Heiko, 64397 Modautal (DE); Diehl, Peter G., 65421 Groß-Gerau (DE)
(74) Vertreter: Daniel, Ulrich W.P.

(56) Entgegenhaltungen:
- EP-A- 1 195 301
- EP-A- 1 334 889
- EP-A- 1 431 143
- DE-A1- 10 044 924
- FR-A- 2 699 754
- US-A- 5 336 980

## Beschreibung

Die Erfindung bezieht sich auf ein Verfahren zur Positionierung eines mit einem Antriebsmotor gekoppelten Scheibenwischers an einer Scheibe eines Kraftfahrzeugs, der ein Sensor zugeordnet ist, wobei die Position des Scheibenwischers mit dem Sensor erfasst und in Abhängigkeit von einem Signal des Sensors eine Stromzufuhr zu dem Antriebsmotor von einem mit dem Antriebsmotor und dem Sensor verbundenen Steuergerät unterbrochen wird und ein Kraftfahrzeug dazu.

Die US-A-5 336 980 beschreibt eine Vorrichtung zur Steuerung einer Scheibenwischeranlage, wobei an einer Scheibe eines Kraftfahrzeugs ein Sensor angeordnet ist, um zum einen ein Überstreichen eines Scheibenwischers und zum anderen einen Belag (z.B. Regen) auf der Scheibe zu erfassen. Die Zeit zwischen zwei Wischvorgängen wird im Zusammenhang mit dem Belag der Scheibe ausgewertet, um insbesondere den Verschmutzungsgrad der Scheibe und damit die Stärke des Regens zu beurteilen und in Abhängigkeit von dem Verschmutzungsgrad entweder einen neuen Wischzyklus zu starten oder den Scheibenwischer in eine Parkposition zu fahren.

Im Weiteren offenbart die FR-A-2 699 754 eine Vorrichtung zur Stromversorgung eines elektrischen Motors zum Antrieb eines Scheibenwischerarms eines Kraftfahrzeugs mit einer Steuereinheit, die mit benutzerseitig zu betätigenden Schaltern und Lagesensoren für die Position des Scheibenwischers verbunden ist, wobei die Lagesensoren zur Ermittlung einer für das Überstreichen einer Scheibe benötigten Zeit verwendet werden.

Darüber hinaus ist aus der EP 1 431 143 A2 ein Regensensor bekannt, der auf einer Scheibe eines Kraftfahrzeugs zu befestigen ist und einen Messbereich aufweist, der der auf der Scheibe in einem von einem Scheibenwischer überstreichbaren Wischbereich angeordnet ist. Der Regensensor umfasst Mittel zum direkten Erkennen des Überstreichens.

Die DE 100 44 924 A1 zeigt eine Scheibenwischeranlage mit einem Scheibenwischerarm, der aufgrund einer speziellen manuellen Eingabe durch seinen Antrieb in eine von der Ruhestellung abweichende, durch gespeicherte Daten bestimmte Servicestellung steuerbar ist. Zur Positionierung des mit dem Antriebsmotor gekoppelten Scheibenwischers an der Scheibe des Kraftfahrzeugs, der der Sensor zugeordnet ist, wird die Position des Scheibenwischers mit dem Sensor erfasst und in Abhängigkeit von einem Signal des Sensors eine Stromzufuhr zu dem Antriebsmotor von einem mit dem Antriebsmotor und dem Sensor verbundenen Steuergerät unterbrochen, wobei der Scheibenwischer in eine von einem Nutzer mit Hilfe eines Bedienelements an einem Armaturenbrett individuell wählbare Parkposition gefahren wird.

Schließlich offenbart die EP 1 334 889 A2 und die EP 1 195 301 A2 jeweils eine Wischvorrichtung, für eine Scheibe eines Kraftfahrzeugs mit einem motorisch angetriebenen Scheibenwischer, der über eine Steuerungseinrichtung in unterschiedliche Parkstellungen zu bewegen ist. Um eine Beschädigung einer Wischlippe des Scheibenwischers aufgrund einer zu langen Verweilzeit in einer bestimmten Parkstellung zu verhindern, wird die Parkstellung in Abhängigkeit von der Ruhezeit, eines die Parkstellung beschreibenden Informationssignals und eines Umgebungsparameters geändert.

Aus der Praxis der Kraftfahrzeugtechnik ist es bekannt, an Front- und Heckscheibe eines Kraftfahrzeugs jeweils ein oder mehrere Scheibenwischer anzuordnen, um die jeweiligen Scheibe für eine klare Sicht sauber zu halten. Der oder die Scheibenwischer werden auch mit unterschiedlichen Geschwindigkeiten mit Hilfe von Elektromotoren und entsprechenden Gestängen im Wesentlichen kreisbogenförmig über die Scheibe bewegt. Aus Kostengründen werden als Wischermotoren relativ einfach aufgebaute Elektromotoren verwendet, die sich vor allem durch ihre Langlebigkeit auszeichnen.

Die Winkelgeschwindigkeit, mit der sich ein Scheibenwischer über die Scheibe bewegt, hängt von mehreren Faktoren, wie der Fahrzeuggeschwindigkeit und damit dem Luftwiderstand, dem Feuchtigkeitsgrad der Scheibe und dergleichen, ab. Üblicherweise dauert ein Wischzyklus, d. h. die Bewegung des Scheibenwischers von seiner Ausgangsposition über die Scheibe und wieder in die Ausgangsposition zurück, zwischen 2 und 2,5 Sekunden.

Weiterhin ist es bekannt, insbesondere an einer Frontscheibe eines Kraftfahrzeugs verschiedene Sensoren anzuordnen. Dies sind u. a. Hell-/Dunkelsensoren, mit denen die Umgebungshelligkeit erfasst wird, um beispielsweise selbsttätig ein Abblendlicht des Kraftfahrzeugs bei Einbrechen der Dunkelheit einzuschalten. Ebenso sind Regensensoren, die mit verschiedenen Messprinzipien arbeiten, bekannt, um bei einsetzendem Regen die Scheibenwischer selbsttätig zu aktivieren.

Die DE 196 19 879 A1 beschreibt einen Regensensor, der bei zwei Scheibenwischern an einer Scheibe zwischen den beiden Scheibenwischern angeordnet ist, um zu gewährleisten, dass der Bereich der Scheibe, in dem der Regensensor angeordnet ist, bei den Wischbewegungen der Scheibenwischer zumindest von einem der Scheibenwischer überstrichen wird, um Regentropfen aus diesem Bereich zuverlässig zu entfernen. Somit kann ein Aufhören des Regens zuverlässig festgestellt werden.

Die DE 199 50 293 A1 offenbart eine Antriebsvorrichtung für Scheibenwischer von Kraftfahrzeugen, die derart ausgelegt ist, dass bei ausgeschalteter Fahrzeugzündung ein Scheibenwischer von seiner Park- oder Ausgangsposition in eine vom Nutzer gewünschte Ruheposition bewegbar ist. Dies kann beispielweise durch Betätigen des entsprechenden Lenkstockhebels erfolgen, um den Scheibenwischer beispielsweise im Wesentlichen senkrecht an der Scheibe zu positionieren, wodurch er für Wartungsarbeiten frei zugänglich ist. Dies ist insofern nachteilig, als hierzu ein erheblicher schaltungstechnischer Aufwand notwendig ist. Soll die Position des Scheibenwischers auf Grund der Signale des elektrischen Antriebsmotors bestimmt werden, so ist der Einsatz eines wirtschaftlich aufwändigen Schrittmotors notwendig.

Es ist Aufgabe der Erfindung, ein Verfahren zum Positionieren eines Scheibenwischers und ein Kraftfahrzeug der eingangs genannten Art zu schaffen, mit bzw. bei dem in einfacher Weise der Scheibenwischer in einer gewünschten Position angeordnet werden kann.

Erfindungsgemäß wird die Aufgabe durch die Merkmale der Ansprüche 1 und 4 gelöst.

Die Unteransprüche stellen vorteilhafte Ausgestaltungen der Erfindung dar.

Der Kerngedanke der Erfindung besteht darin, mit einem an sich beliebig gestalteten Regensensor, der der mit dem Scheibenwischer versehenen Scheibe zugeordnet und der bereits am Kraftfahrzeug vorhanden ist, die Position des über die Scheibe streichenden Scheibenwischers zu erfassen. Dabei können vom Fachmann verschiedene Messprinzipien des Sensors eingesetzt werden. Ist die Position des Scheibenwischers festgestellt, kann beispielsweise über das zentrale Steuergerät, das mit bekannten Datenbus-Architekturen mit allen Komponenten des Kraftfahrzeugs zu deren Steuerung in Verbindung steht, der Scheibenwischer an der gewünschten Position angehalten werden.

Der Vorteil der Erfindung besteht darin, dass die entsprechende hard- und/oder sofwaremäßige Auslegung des zentralen Steuergeräts zur Positionierung des Scheibenwischers praktisch ohne zusätzlichen Aufwand erfolgen kann. Somit ist es möglich, mit bereits im Kraftfahrzeug vorhandenen Komponenten den Scheibenwischer in einer gewünschten Position anzuordnen. Dabei ist insbesondere der Einsatz eines teueren Schrittmotors nicht notwendig.

Von verschiedenen Nutzern des Kraftfahrzeugs wird jeweils eine individuelle Parkposition gewählt, die über einen entsprechenden Schalter im Innenraum des Kraftfahrzeugs vorgegeben wird. Bei dem Schalter kann es sich um einen Wischer-/Wascherschalter handeln, mit dem über eine Mehrfachbetätigung oder mittels eines Zusatzschalters die Parkposition eingestellt wird. Der Schalter kann aber auch als separater Schalter in der Armaturentafel angeordnet oder als Hard- bzw. Software-Schalter eines so genannten Infotainmentsystems ausgebildet sein. Insbesondere ist es möglich, dass der Scheibenwischer bei ausgeschalteter Zündung in die gewünschte Parkposition gefahren wird. In gleicher Weise kann der Scheibenwischer auch während der Fahrt des Kraftfahrzeugs in eine mittige Parkposition verfahren werden, um hier einen möglichst geringen Luftwiderstand zu bieten.

Mit dem an sich beliebig ausgestalteten Regensensor zur selbsttätigen Ansteuerung des Scheibenwischers bei einsetzendem Niederschlag kann mit an sich beliebigen Messprinzipien das Vorbeistreichen des Scheibenwischers an einem Sensorbereich des Regensensors festgestellt werden.

Zur Positionierung des Scheibenwischers an der Scheibe wird zweckmäßigerweise der Scheibenwischer bei Überstreichen des Sensors angehalten. Hierzu wird die Stromzufuhr zum Antriebsmotor des Scheibenwischers vom Steuergerät unterbrochen, sobald von dem Sensor das Vorhandensein des Scheibenwischers festgestellt wird. Z. B. kann der Sensor im Wesentlichen mittig in einem oberen Bereich der Scheibe angeordnet sein, wodurch der Scheibenwischer in einer im Wesentlichen senkrechten Position angehalten wird, um beispielsweise zum Austauschen des Wischerblatts von der Scheibe abgeklappt zu werden.

In einer alternativen Ausgestaltung wird eine Zeit t₀ erfasst, die seit dem Verlassen der Ausgangsoder Parkposition bis zum Überstreichen des Sensorbereichs des Sensors vergangen ist. Ausgehend von dieser Zeit t₀ und dem bekannten Verschwenkungswinkel von der Ausgangsposition bis zu dem Sensor sowie dem Verschwenkungswinkel zwischen der Position beim Überstreichen des Sensors und einer gewünschten Endposition kann eine Zeit t₁ ermittelt oder extrapoliert werden, die der Scheibenwischer durchschnittlich bis zum Erreichen der gewünschten Position braucht. Diese Zeit t₁ ist im Prinzip abhängig von einer Fahrzeuggeschwindigkeit oder dem Feuchtigkeitsgrad der Scheibe, jedoch kann ein ungefährer Mittelwert angenommen werden, so dass sich gegebenenfalls die Endposition des Scheibenwischers bei mehreren Wiederholungen geringfügig unterscheidet.

Selbstverständlich kann das Verfahren sowohl an Scheiben mit ein, zwei oder mehr Scheibenwischern durchgeführt werden, wobei beispielsweise bei zwei Scheibenwischern üblicherweise nur ein Sensor zur Erfassung einer Position eines Scheibenwischers notwendig ist, da die beiden Scheibenwischer synchronisiert sind. In gleicher Weise kann das Verfahren bei Scheibenwischern an Scheinwerfergläsern des Kraftfahrzeugs angewendet werden.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

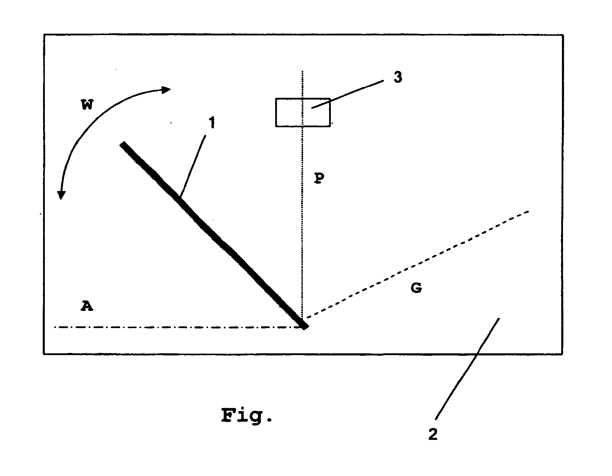

Die Erfindung wird im Folgenden anhand eines Ausführungsbeispiels unter Bezugnahme auf die zughörige Zeichnung näher erläutert. Die einzige Fig. der Zeichnung zeigt eine schematische Darstellung einer Scheibe eines Kraftfahrzeugs zur Durchführung des erfindungsgemäßen Verfahrens.

Der Scheibe 2 des Kraftfahrzeugs, beispielsweise eine Front- oder Heckscheibe, ist in an sich bekannter Weise ein Scheibenwischer 1 zugeordnet, der, wie durch den Doppelpfeil W angedeutet, im Wesentlichen kreisbogenförmig über die Scheibe 2 streicht. Der Scheibenwischer 1 wird von einem zentralen Steuergerät des Kraftfahrzeugs derart angesteuert, dass er in ausgeschaltetem Zustand bzw. bei ausgeschalteter Zündung in eine Ausgangsposition A, wie durch die strichpunktierte Linie angedeutet, verfahren wird.

Zusätzlich ist der Scheibe 2 mittig ein als Regensensor ausgebildeter Sensor 3mit an sich beliebigen Messprinzipien, angeordnet. Überstreicht der Scheibenwischer 1 den Sensorbereich des Sensors 3 kann die momentane Position des Scheibenwischers 1 festgestellt werden. Dementsprechend kann der Scheibenwischer 1 genau in dieser Position angehalten werden, wie durch die punktierte Linie P verdeutlicht. In dieser mittigen Parkposition P kann beispielsweise ein Wischerblatt des Scheibenwischers 1 ausgetauscht werden. Während der Fahrt des Kraftfahrzeugs ist in dieser Position P der Luftwiderstand des Scheibenwischers 1 minimiert.

In gleicher Weise ist es möglich, dass die Zeit t₀, die der Scheibenwischer 1 von der Ausgangsposition A bis zur Position P benötigt, erfasst wird und daraus eine ungefähre Zeit t₁ errechnet oder ermittelt wird, die der Scheibenwischer 1 durchschnittlich bis zum Erreichen einer anderen gewünschten Position G, die gestrichelt eingezeichnet ist, benötigt. Dementsprechend wird vom Steuergerät nach dieser Zeit t₁ die Stromzufuhr zum Elektromotor des Scheibenwischers 1 unterbrochen und der Scheibenwischer 1 bleibt in der gewünschten Position G stehen.

### Bezugszeichenliste

- 1.: Scheibenwischer
- 2.: Scheibe
- 3.: Sensor
- A: Ausgangsposition
- P: Parkposition
- G: gewünschte Position
- W: Doppelpfeil

## Patentansprüche

1. Verfahren zur Positionierung eines mit einem Antriebsmotor gekoppelten Scheibenwischers (1) an einer Scheibe (2) eines Kraftfahrzeugs, der ein Sensor (3) zugeordnet ist, wobei die Position des Scheibenwischers (1) mit dem Sensor (3) erfasst und in Abhängigkeit von einem Signal des Sensors (3) eine Stromzufuhr zu dem Antriebsmotor von einem mit dem Antriebsmotor und dem Sensor (3) verbundenen Steuergerät unterbrochen wird, **dadurch gekennzeichnet** daβ er Scheibenwischer (1) in eine von einem Nutzer mit Hilfe eines Bedienelements an einem Armaturenbrett individuell wählbare Parkposition (P) oder in eine mittige Parkposition (P) gefahren und als Sensor (3) ein Regensensor verwendet wird.

2. Verfahren nach Anspruch 1, **dadurch gekennzeichnet, dass** bei Überstreichen des sensors (3) der Scheibenwischer in die mittige Parkposition (p) (1) angehalten wird.

3. Verfahren nach Anspruch 1, **dadurch gekennzeichnet, dass** bei Überstreichen des Sensors (3) durch den Scheibenwischer (1) aus einer seit dem Verlassen einer Ausgangsposition (A) verstrichenen Zeit (t₀) sowie einem Verschwenkungswinkel zwischen der Ausgangsposition (A) und dem Sensor (3) eine Zeit (t₁) bis zum Erreichen einer gewünschten Parkposition (G) ermittelt wird.

4. Kraftfahrzeug mit einem Scheibenwischer (1) für eine Scheibe (2), der ein Sensor (3) zugeordnet ist und einem mit einem Steuergerät verbundenen Antriebsmotor für den Scheibenwischer, wobei das mit dem Sensor (3) gekoppelte Steuergerät in Abhängigkeit von einem Signal des Sensors (3) eine Stromzufuhr zu dem Antriebsmotor unterbricht und der Scheibenwischer (1) mittels des Sensors (3) in einer gewünschten Parkposition (G) an der Scheibe (2) positionierbar ist, **dadurch gekennzeichnet** daβ der Sensor (3) ein Regensensor ist und mittels eines Schalters eine individuelle Parkposition (P) oder eine mittige Parkposition des Scheibenwischers einstellbar ist.

5. Kraftfahrzeug nach Anspruch 4, **dadurch gekennzeichnet, dass** der Scheibenwischer (1) am Ort des Sensors (3) in die miltige Parkpositionier positionierbar ist.

6. Kraftfahrzeug nach Anspruch 4, **dadurch gekennzeichnet, dass** beim Überstreichen des Sensors (3) durch den Scheibenwischer (1) aus einer seit dem Verlassen einer Ausgangsposition (A) verstrichenen Zeit (t₀) sowie einem Verschwenkungswinkel zwischen der Ausgangsposition (A) und dem Sensor (3) eine zeit (t₁) bis zum Erreichen einer gewünschten Parkposition (G) ermittelbar ist.

## Claims

1. A method for positioning a windshield wiper (1) coupled with a drive motor on a pane (2) of a motor vehicle which is associated with a sensor (3), with the position of the windshield wiper (1) being detected by the sensor (3) and depending on a signal of the sensor (3) a power supply to the drive motor is interrupted by a control device connected with the drive motor and the sensor (3), **characterized in that** the windshield wiper (1) can be moved to a parking position (P) or a middle parking position (P) which is individually selectable by means of control element on a dashboard and a rain sensor is used as the sensor (3).

2. A method according to claim 1, **characterized in that** when the windshield wiper (1) sweeps over the sensor (3) the windshield wiper (1) is held in the middle parking position (P).

3. A method according to claim 1, **characterized in that** when the windshield wiper (1) sweeps over the sensor (3) a time (t₁) up to reaching a desired parking position (G) is determined from a time (t₀) that has passed since leaving an initial position (A) and a pivoting angle between the initial position (A) and the sensor (3).

4. A motor vehicle with a windshield wiper (1) for a pane (2) which is associated with a sensor (3) and with a drive motor for the windshield wiper which is connected to the control device, wherein the control device is coupled with the sensor (3) interrupting the power supply to the drive motor depending on a signal of the sensor (3) and the windshield wiper (1) being positionable in a desired parking position (G) on the pane (2) by means of the sensor (3), **characterized in that** the sensor (3) is a rain sensor and an individual parking position (P) or a middle parking position of the windshield wiper can be set by means of a switch.

5. A motor vehicle according to claim 4, **characterized in that** the windshield wiper (1) can be positioned at the location of the sensor (3) in the middle parking position.

6. A motor vehicle according to claim 4, **characterized in that** when the windshield wiper (1) sweeps over the sensor (3) a time (t₁) up to reaching a desired parking position (G) is determined from a time (t₀) that has passed since leaving an initial position (A) and a pivoting angle between the initial position (A) and the sensor (3).

## Revendications

1. Procédé pour le positionnement sur une vitre (2) d'un véhicule à moteur d'un essuie-glace (1) couplé à un moteur d'entraînement, qui est associé à un capteur (3), la position de l'essuie-glace (1) étant détectée par le capteur (3) et une alimentation électrique du moteur d'entraînement étant coupée par un appareil de commande relié au moteur d'entraînement et au capteur (3) en fonction d'un signal du capteur (3), **caractérisé en ce que** l'essuie-glace (1) est amené dans une position de rangement (P) ou une position de rangement centrée (P) pouvant être sélectionnée individuellement par un utilisateur à l'aide d'un élément de commande sur un tableau de bord et le capteur (3) utilisé est un capteur de pluie.

2. Procédé selon la revendication 1, **caractérisé en ce que** lorsqu'il passe par-dessus le capteur (3), l'essuie-glace (1) est arrêté dans la position de rangement centrée (P).

3. Procédé selon la revendication 1, **caractérisé en ce que** lorsque l'essuie-glace (1) passe par-dessus le capteur (3), un temps (t₁) avant qu'il arrive dans une position de rangement souhaitée (G) est déterminé à partir du temps (t₀) écoulé depuis qu'il a quitté une position de départ (A) et d'un angle de pivotement entre la position de départ (A) et le capteur (3).

4. Véhicule à moteur avec un essuie-glace (1) pour une vitre (2), qui est associé à un capteur (3), et avec un moteur d'entraînement relié à un appareil de commande pour l'essuie-glace, dans lequel l'appareil de commande couplé au capteur (3) coupe une alimentation électrique du moteur d'entraînement en fonction d'un signal du capteur (3) et l'essuie-glace (1) peut être positionné dans une position de rangement souhaitée (G) sur la vitre (2) au moyen du capteur (3), **caractérisé en ce que** le capteur (3) est un capteur de pluie et une position de rangement individuelle (P) ou une position de rangement centrée de l'essuie-glace peut être définie au moyen d'un commutateur.

5. Véhicule à moteur selon la revendication 4, **caractérisé en ce que** l'essuie-glace (1) peut être positionné dans la positon de rangement centrée à l'emplacement du capteur (3).

6. Véhicule à moteur selon la revendication 4, **caractérisé en ce que** lorsque l'essuie-glace (1) passe par-dessus le capteur (3), un temps (t₁) jusqu'à ce qu'il atteigne une position de rangement souhaitée (G) peut être déterminé à partir du temps (t₀) écoulé depuis qu'il a quitté une position de départ (A) ainsi que d'un angle de pivotement entre la position de départ (A) et le capteur (3).
